(19)

Europäisches
Patentamt
European
Patent Office
Office européen
des brevets

(11) **EP 2 574 951 A2**

(12) **EUROPEAN PATENT APPLICATION**

(43) Date of publication:
**03.04.2013 Bulletin 2013/14**

(21) Application number: **12186413.6**

(22) Date of filing: **27.09.2012**

(51) Int Cl.:
*G01S 3/80* (2006.01)  *G01H 1/00* (2006.01)
*G01H 3/00* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **30.09.2011  US 201113250269**

(71) Applicant: **Hitachi Ltd.
Tokyo 100-8280 (JP)**

(72) Inventors:
• **Inoue, Akira
Farmington Hills, MI Michigan (US)**
• **Tanabe, Yosuke
West Bloomfield, MI Michigan (US)**

(74) Representative: **MERH-IP
Matias Erny Reichl Hoffmann
Paul-Heyse-Strasse 29
80336 München (DE)**

(54) **A method for analyzing sound transmission paths in a system**

(57)     A method for analyzing sound transmission paths in a system from a sound source (22) to a receiver (24) in which each sound path (Path1, Path 2, ...) is first identified from the sound source (22) to the receiver (24). These sound paths include both structure-borne as well as air-borne sound paths (106). The transfer function from each path to the receiver is measured in terms of particle velocity vector (when particle velocity sensor is used) or a set of sound pressures (when microphone array is used) (200, 202). The load at each path is meas- ured in the actual source operation. The load at each path is multiplied by the transfer function from the path to the receiver, which represents the contribution of the path. When particle velocity vector is used as the receiv- ing quantity, each path contribution to the particle velocity vector at the receiver is analyzed by the three-dimen- sional vector manner. When sound pressure distribution (or a set of sound pressure values) is used as the receiv- ing quantity, each path contribution to the receiver is an- alyzed by the three-dimensional surface manner.

# FIG. 1

Result of STPA Using 3D Intensity Transfer Function

3D Intensity Vector at Receiver from Path I

EP 2 574 951 A2

**Description**

BACKGROUND OF THE INVENTION

I. FIELD OF THE INVENTION

The present invention relates to a method for analyzing sound transmissions in a system from a sound source to a receiver.

II. DESCRIPTION OF RELATED ART

Transfer path analysis (TPA) is a technique for comparing the sound transmission paths in a system from the sound source and to a receiver. TPA is particularly useful in automotive applications to determine the sound transmission paths between the various sound sources, such as the engine, transmission, etc., and the receiver, typically a user's ears in the passenger compartment.

In the previously known applications of TPA for automotive systems, each sound path between the sound source and the receiver is first identified. The sound transmission paths, furthermore, include both structure-borne sound paths as well as air-borne sound paths. For example, structure-borne sound paths would include the sound path from a sound source, such as the engine, through the engine mountings and to the engine chassis. Conversely, air-borne sound paths would include the sound path between a side (surface) of a sound source, such as the engine, and through the air (by the direct sound radiation from the source) to the receiver.

The total sound pressure produced at the receiver is decomposed into each path contribution, which is the summation of sound pressures through the all structure-borne paths plus the summation of sound pressures through the all air-borne paths. The sound pressure through a structure-borne path is estimated by the force at the path in the source operation multiplied by the (structural) transfer function from the path to the receiver. The sound pressure through an air-borne path is estimated by the volume acceleration from the surface of the source structure in the source operation at the path multiplied by the (acoustic) transfer function from the path to the receiver.

One disadvantage of the previously known transfer path analysis utilized in such systems, and particularly automotive systems, is that only the magnitude of the noise (sound) received at the receiver was used to analyze the sound transmission paths. Conversely, the direction of the sound at the receiver for each sound path can not be considered. This, in turn, resulted in inaccurate or at least incomplete analysis of the sound transmission paths in the system between the sound source(s) and the receiver(s).

SUMMARY OF THE PRESENT INVENTION

The present invention provides a method for analyzing sound transmission paths in a sound system in the frequency domain which overcomes the disadvantages and shortcomings of the previously known methods.

In brief, the present invention provides an improved method for analyzing sound transmission paths between a sound source(s) and a receiver(s) in a system which comprises the three-dimensional analysis of the sound radiation to the receiver. These sound transmission paths include both structure-borne sound paths, e.g. a sound path from the engine through an engine mounting to a passenger' ear in an automotive vehicle, as well as air-borne or acoustical paths, e.g. the sound path from a surface (side area) of the engine that directly radiates sound to the air to the passenger's ear.

The transfer function in terms of particle velocity vector for each sound path is first measured for each sound path preferably by using a particle velocity sensor at the receiver. Unlike the previously known transfer path analysis, since the particle velocity vector, rather than only the magnitude, of the sound at the receiver is measured, both the magnitude and direction of the sound at the receiver are measured to form the particle velocity vector.

For the structure-borne sound path, the transfer function vector is the particle velocity vector at the receiver divided by the force at the structure-borne sound path. For the air-borne path, the transfer function vector is the particle velocity vector at the receiver divided by the volume acceleration at the air-borne sound path.

However, since force is difficult in many cases to measure, the force at the paths may be estimated instead. Traditionally, the estimation is exercised as follows. After removing the source structure (e.g. engine), the accelerances (transfer function between the excitation force to the acceleration response) among the all structure-borne paths are measured, which make an accelerance matrix. The forces at the paths are estimated by the accelerations at the paths pre-multiplied by the inverse of the accelerance matrix. In the case of over-determination, matrix pseudo-inverse is used instead of matrix inverse.

The particle velocity transfer function is then multiplied by its associated force or volume acceleration for each sound path which is the decomposition of the particle velocity vector at the receiver into each path contribution, and thus enables to identify the dominant sound path(s) and direction(s) of the received particle velocity at the receiver.

Alternatively, a microphone array at the receiver is utilized to measure the radiated sound distribution (of the sound radiation surface) to the receiver. Both the particle velocity vector and the radiated sound distribution specify where the major part of the sound comes from. In the microphone array case, the standard transfer path analysis of sound pressure is implemented for each microphone of the microphone array. Then, the sound radiation distribution to the receiver is identified.

BRIEF DESCRIPTION OF THE DRAWING

A better understanding of the present invention will be had upon reference to the following detailed description when read in conjunction with the accompanying drawing, wherein like reference characters refer to like parts throughout the several views, and in which:

FIG. 1 is a diagrammatic view illustrating a first preferred embodiment of the invention;
FIG. 2 is a view similar to FIG. 1, but illustrating a second preferred embodiment of the invention;
FIG. 3 is a flowchart illustrating the operation of the first preferred embodiment of the invention; and
FIG. 4 is a flowchart illustrating the operation of the second preferred embodiment of the invention.

DETAILED DESCRIPTION OF A PREFERRED

EMBODIMENT OF THE PRESENT INVENTION

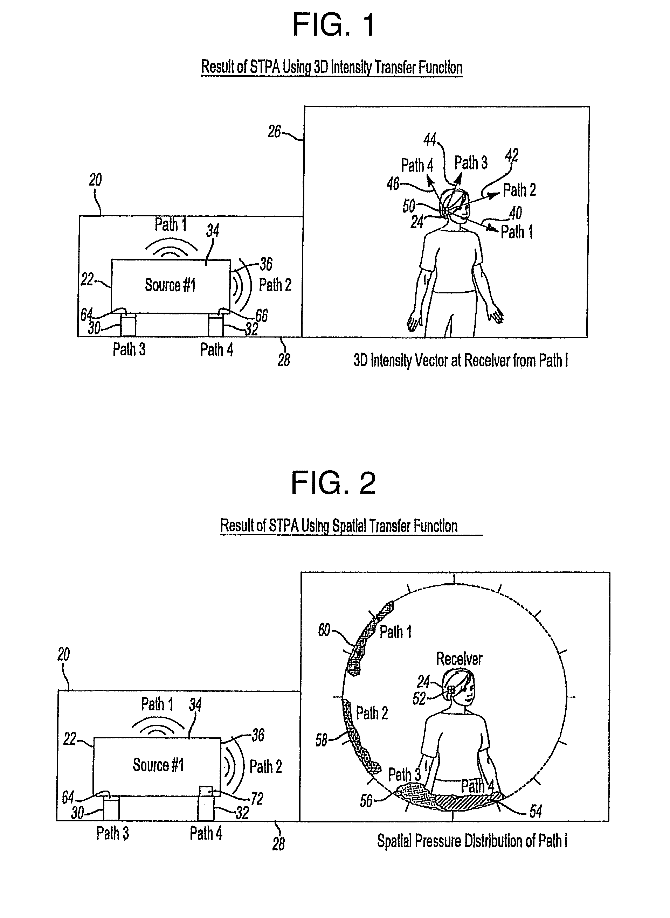

With reference first to FIG. 1, a sound transmission system, such as an automobile, is illustrated diagrammatically. Although the system of FIG. 1 is illustrated as an automotive vehicle 20, it is to be understood that the present invention is not limited to the sound analysis for an automotive vehicle but rather applies to any sound system with multiple sound transmission paths. Consequently, the automotive vehicle 20 shown in FIG. 1 is for illustration purposes only.

The vehicle 20 includes a sound source 22, such as a vehicle engine, which generates noise (sound) during operation. That noise is received by a receiver 24, e.g. a vehicle passenger, in the passenger compartment 26. Ideally, minimization, or at least reduction, of the noise received by the receiver 24 is desired.

In the sound transmission analysis method of the present invention, each sound pathway from the sound source 22 and to the receiver 24 is first identified. The sound paths include both structure-borne sound paths as well as air-borne or acoustic sound paths.

For example, still referring to FIG. 1, the engine 22 is mounted to the vehicle chassis 28 by engine mounts 30 and 32. These engine mounts thus form structure-borne sound paths from the engine 22 to the receiver 24.

The identification of the sound paths also includes acoustical sound paths from the sound source 22 to the receiver 24. These acoustical sound paths include, for example, sides 34 and 36 of the engine. The acoustical sound paths differ from the structure-borne sound paths in that the acoustical sound paths create sound through air compression caused by surface (the sides 34 and 36) vibration of the engine 22 whereas the structural sound paths through the engine mounts 30 and 32 create sound through mechanical vibration of the structural components of the chassis 28 and compartment 26.

Air-borne Path: (Engine 22) → (Engine surface areas 34 and 36) → Air → (Compartment 26) → Air → (Passenger 24)
Structure-borne Path: (Engine 22) → (Mounts 30 and 32) → (Chassis 28) → (Compartment 26) → Air → (Passenger 24)

In this example shown in FIG. 1, two structure-borne paths and two air-borne paths are considered. However, the present invention does not limit the number of paths.

A three-dimensional particle velocity vector is determined which represents each sound path contribution to the particle velocity at the receiver. In other words, the particle velocity vector at the receiver is decomposed into each path contribution at each frequency:

$$\vec{V}_{\text{Receiver}}^{\text{Op}} = \underbrace{\vec{V}_{\text{Path 1}}^{\text{Op}} + \vec{V}_{\text{Path 2}}^{\text{Op}}}_{\text{Air-borne}} + \underbrace{\vec{V}_{\text{Path 3}}^{\text{Op}} + \vec{V}_{\text{Path 4}}^{\text{Op}}}_{\text{Structure-borne}}$$

Here, the superscript Op explicitly denotes a value in an operational condition of the source. For example, a particle velocity vector 40 corresponds to the sound path between the surface 34 while three-dimensional particle velocity vectors 42, 44 and 46 respectively correspond to the sound path between the surface 36, engine mount 30, and engine mount 32. Furthermore, each vector 40-46 includes not only the magnitude of the sound (particle velocity) at the receiver 24, but also the direction of the sound (particle velocity) at the receiver 24.

In order to measure the three-dimensional sound vectors 40-46, a particle velocity sensor 50 is preferably positioned at the receiver 24. Such a particle velocity sensor measures not only the magnitude but also the direction of the received sound.

Still referring to FIG. 1, in order to calculate the three-dimensional particle velocity transfer function for each sound path, different methods must be used for structure-borne sound paths as opposed to acoustical air-borne sound paths. For example, for each structure-borne sound path it is necessary to measure (or estimate) the force along the structure-borne sound path which is multiplied by the structure-borne transfer function from the path to the receiver:

$$\vec{V}_{\text{Path }n}^{\text{Op}} = \left( \frac{\vec{V}_{\text{Receiver}}}{F_{\text{Path }n}} \right) F_{\text{Path }n}^{\text{Op}} \qquad (n = 3 \text{ and } 4)$$

Here, $(\vec{V}_{\text{Receiver}}/F_{\text{Path }n})$ is the structure-borne transfer function in terms of particle velocity from the path $n$ to the receiver which is measured in a separate process without the source operation. In order to obtain the force $F_{\text{Path }n}^{\text{Op}}$ ($n = 3$ and $4$) in the source operation, force sensors 64 and 66 are preferably mechanically connected in series with the sound path between the sound source 22 and the structural support, such as the engine mounts 30 and 32. In many cases it is not practical to install a force sensor 64 or 66 in series with the structure-borne sound path (mount). In these cases, any conventional alternative method, such as the matrix inversion method or the stiffness method, is implemented by installing accelerometer in parallel with the structure-borne sound path.

The transfer function $(\vec{V}_{\text{Receiver}}/F_{\text{Path }n})$ for each structure-borne sound path is determined in any conventional fashion, such as by using an excitation shaker or impact hammer to excite each sound path, in a separate measurement process. Theoretically, the source structure 22 needs to be removed in the structure-borne transfer function measurement.

$$\left( \frac{\vec{V}_{\text{Receiver}}}{F_{\text{Path }n}} \right) \qquad (n = 3 \text{ and } 4)$$

Here, $F_{\text{Path }n}$ is the excitation force by the shaker or hammer at the path, and $\vec{V}_{\text{Receiver}}$ is the resulting particle velocity at the receiver.

In order to obtain the particle velocity contribution from the air-borne paths, volume acceleration from the sound radiation surface of the source is used.

$$\vec{V}_{\text{Path }n}^{\text{Op}} = \left( \frac{\vec{V}_{\text{Receiver}}}{Q_{\text{Path }n}} \right) Q_{\text{Path }n}^{\text{Op}} \qquad (n = 1 \text{ and } 2)$$

Here, $(\vec{V}_{\text{Receiver}}/Q_{\text{Path }n})$ is the air-borne transfer function in terms of particle velocity from the path $n$ to the receiver which is measured in a separate process without the source operation. The volume acceleration $Q_{\text{Path }n}$ ($n = 1$ and $2$) in the source operation is ideally measured by volume acceleration sensors installed near the source surface 34 and 36. However, because it is often difficult, acceleration sensors are instead installed on the surface 34 and 36 each of which well represents the acceleration of the surface. The volume acceleration is obtained as the measured acceleration multiplied by the area.

The transfer function $(\vec{V}_{\text{Receiver}}/Q_{\text{Path }n})$ for each air-borne sound path is determined in any conventional fashion, such as by using a volume acceleration source (speaker) to excite each sound path.

$$\left( \dfrac{\vec{V}_{\text{Receiver}}}{Q_{\text{Path}\,n}} \right) \qquad (n = 1 \text{ and } 2)$$

Here, $Q_{\text{Path}\,n}$ is the excitation volume acceleration by a speaker at the path, and $\vec{V}_{\text{Receiver}}$ is the resulting particle velocity at the receiver.

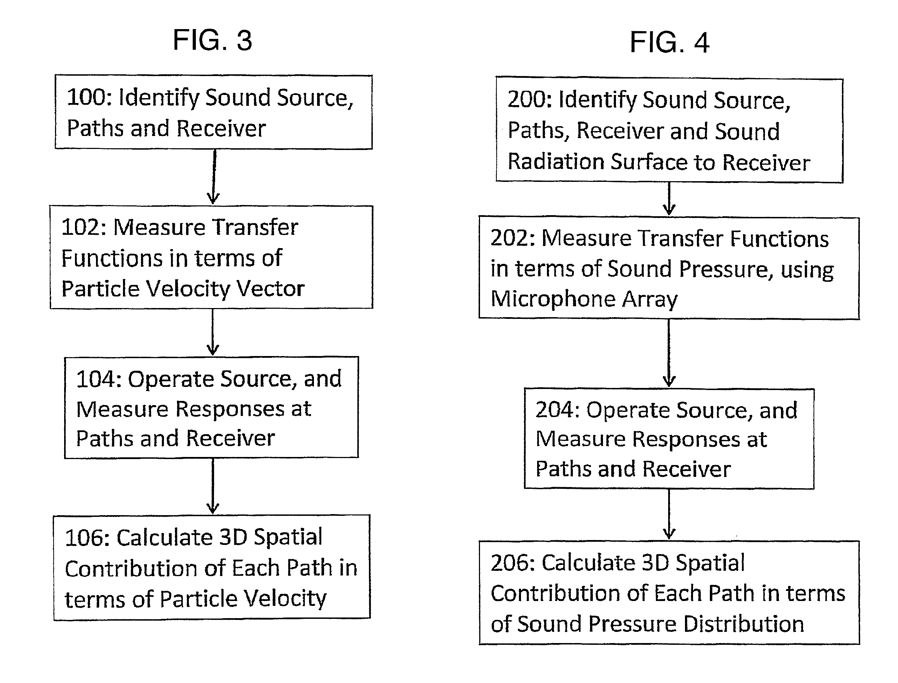

With reference now to FIG. 3, a flowchart depicting the method of the present invention is illustrated which corresponds to FIG. 1 and utilizes a particle velocity sensor to measure the three-dimensional particle velocity vector for each of the sound path is shown. At step 100 each sound path from the sound source 22 to the receiver 24 is identified. The sound paths include both structure-borne sound paths and air-borne (acoustic) sound paths. Step 100 then proceeds to step 102.

At step 102, the transfer functions in terms of particle velocity vector which are $(\vec{V}_{\text{Receiver}}/F_{\text{Path}\,n})$ and $(\vec{V}_{\text{Receiver}}/Q_{\text{Path}\,n})$ are measured without the source operation. If necessary, the transfer functions between the structure-borne paths $(A_{\text{Path}\,n}/F_{\text{Path}\,n})$ are also measured without the source operation in order to estimate the force $F_{\text{Path}\,n}^{\text{Op}}$ (by the matrix inversion method). Step 102 then proceeds to step 104.

At step 104, the source is operated in the actual operating conditions, and the responses $\vec{V}_{\text{Receiver}}^{\text{Op}}$, $Q_{\text{Path}\,n}^{\text{Op}}$ and $F_{\text{Path}\,n}^{\text{Op}}$ (and/or $A_{\text{Path}\,n}^{\text{Op}}$, for the path force estimation, if necessary) are measured. Step 104 then proceeds to step 106.

At step 106, each operational response at the path is multiplied by the corresponding transfer function to find the contribution of the path to the particle velocity at the receiver. The resulting these terms

$$\left( \dfrac{\vec{V}_{\text{Receiver}}}{Q_{\text{Path}\,1}} \right) Q_{\text{Path}\,1}^{\text{Op}} \left(= \vec{V}_{\text{Path}\,1}^{\text{Op}}\right), \quad \left( \dfrac{\vec{V}_{\text{Receiver}}}{Q_{\text{Path}\,2}} \right) Q_{\text{Path}\,2}^{\text{Op}} \left(= \vec{V}_{\text{Path}\,2}^{\text{Op}}\right), \quad \left( \dfrac{\vec{V}_{\text{Receiver}}}{F_{\text{Path}\,3}} \right) \vec{F}_{\text{Path}\,3}^{\text{Op}} \left(= \vec{V}_{\text{Path}\,3}^{\text{Op}}\right),$$

$$\left( \dfrac{\vec{V}_{\text{Receiver}}}{F_{\text{Path}\,4}} \right) \vec{F}_{\text{Path}\,4}^{\text{Op}} \left(= \vec{V}_{\text{Path}\,4}^{\text{Op}}\right)$$

are compared to rank order the paths at each frequency. The magnitude of the particle velocity vector

$$\left| \vec{V}_{\text{Path}\,n}^{\text{Op}} \right| = \sqrt{ \left| V_{\text{Path}\,n}^{\text{Op}} \right|_x^2 + \left| V_{\text{Path}\,n}^{\text{Op}} \right|_y^2 + \left| V_{\text{Path}\,n}^{\text{Op}} \right|_z^2 }, \; (n = 1, 2, 3, 4) \text{ may be first compared to identify the dominant path.}$$

The measured particle velocity at the receiver $\vec{V}_{\text{Receiver}}^{\text{Op}}$ should be compared with the summation of the all contributions of the paths in order to validate this transfer path analysis model.

$$\vec{V}_{\text{Receiver}}^{\text{Op}} \approx \vec{V}_{\text{Path}\,1}^{\text{Op}} + \vec{V}_{\text{Path}\,2}^{\text{Op}} + \vec{V}_{\text{Path}\,3}^{\text{Op}} + \vec{V}_{\text{Path}\,4}^{\text{Op}}$$

If the error (equality) in the above equation is not acceptable, the identified source-paths-receiver model (the step 100) and/or the experimental measurements (the steps 102 and 104) need improvement.

By thereafter comparing the sound attributable to the sound path, the dominant sound path(s) and direction(s) are identified. Following such identification, improvements in the mechanical design of the vehicle or other sound system may be implemented which addresses and reduces the sound transmission to the receiver.

With reference now to FIG. 2, a microphone array 52 may be used in lieu of the particle velocity sensor 50 to measure the three-dimensional sound pressure distribution around the receiver. The measurement surface is shown as a circle around the receiver in FIG. 2, but it is actually sphere (or a part or sphere). For example, when using the microphone array 52, the main sound pressure distribution corresponding to the structural sound path from the engine mount 32 is shown at 54. In other words, the source #1 sound through the path 4 to the receiver 24 is mainly through the area 54. Similarly, a sound pressure distribution 56 corresponds to the sound path via the engine mount 30 while sound pressure distributions 58 and 60 respectively correspond to the acoustic sound paths from surfaces 36 and 34 of the engine 22. In each case, the sound pressure distribution for each sound path includes information containing not only the magnitude of the received sound, but also the direction of the received sound.

With reference now to FIG. 4, a flowchart depicting the method of the present invention is illustrated which corresponds to FIG. 2 and utilizes a microphone array to determine the three-dimensional sound pressure distribution. At step 200 each sound path from the sound source 22 to the receiver 24 is identified. Furthermore, the surface (or sphere) to find the spatial sound pressure distribution by the microphone array is identified. The sound paths include both structure-borne sound paths, as well as air-borne (acoustic) sound paths. Step 200 then proceeds to step 202.

At step 202, the transfer functions in terms of sound pressure measured by each microphone of the microphone array which are $(P_{\text{Receiver}}|_m/F_{\text{Path }n})$ and $(P_{\text{Receiver}}|_m/Q_{\text{Path }n})$ are measured without the source operation. Here, the subscript $m$ (= 1, ..., M) denotes the microphone number of the microphone array, and M is the total number of the microphones in the array. If necessary, the transfer functions between the structure-borne paths are also measured without the source operation in order to estimate the force $F_{\text{Path }n}^{\text{Op}}$ (by the matrix inversion method). Step 202 then proceeds to step 204.

At step 204, the source is operated in the actual operating conditions, and the responses $P_{\text{Receiver}}^{\text{Op}}\big|_m$, $Q_{\text{Path }n}^{\text{Op}}$ and $F_{\text{Path }n}^{\text{Op}}$ (and/or $A_{\text{Path }n'}^{\text{Op}}$ for the path force estimation, if necessary) are measured. Step 204 then proceeds to step 206.

At step 206, each operational response at the path is multiplied by the corresponding transfer function to find the contribution of the path to the sound pressure at each microphone at the receiver. The resulting these terms

$$\left( \frac{P_{\text{Receiver}}|_m}{Q_{\text{Path 1}}} \right) Q_{\text{Path 1}}^{\text{Op}} \left(= P_{\text{Path 1}}^{\text{Op}}\big|_m\right), \quad \left( \frac{P_{\text{Receiver}}|_m}{Q_{\text{Path 2}}} \right) Q_{\text{Path 2}}^{\text{Op}} \left(= P_{\text{Path 2}}^{\text{Op}}\big|_m\right), \quad \left( \frac{P_{\text{Receiver}}|_m}{F_{\text{Path 3}}} \right) F_{\text{Path 3}}^{\text{Op}} \left(= P_{\text{Path 3}}^{\text{Op}}\big|_m\right),$$

$$\left( \frac{P_{\text{Receiver}}|_m}{F_{\text{Path 4}}} \right) F_{\text{Path 4}}^{\text{Op}} \left(= P_{\text{Path 4}}^{\text{Op}}\big|_m\right), \, m = 1, \ldots, \text{M}$$

are compared to rank order the paths at each frequency. The average of the sound pressure measured by the M microphones may be first compared to identify the dominant path.

The measured sound pressrues at the receiver $P_{\text{Receiver}}^{\text{Op}}\big|_m$ $(m = 1, \ldots, \text{M})$ should be compared with the summation of the all contributions of the paths in order to validate the result of path comparison.

$$P_{\text{Receiver}}^{\text{Op}}\big|_m \approx P_{\text{Path 1}}^{\text{Op}}\big|_m + P_{\text{Path 2}}^{\text{Op}}\big|_m + P_{\text{Path 3}}^{\text{Op}}\big|_m + P_{\text{Path 4}}^{\text{Op}}\big|_m \qquad (m = 1, \ldots, \text{M})$$

If the error in the above equation is not acceptable, the identified source-paths-receiver model (the step 200) and/or the experimental measurements (the steps 202 and 204) need improvement. The major sound radiation areas, such as 54, 56, 58 and 60, are determined from the M sound pressure values.

$$f\left(P_1,\ldots,P_M\right)$$

where

f = sound pressure mapping function
P = sound pressure
M = number of microphones.

From the foregoing, it can be seen that the present invention provides an improved transfer path analysis for sound transmission systems, such as automotive vehicles, which accounts not only for the magnitude, but also for the direction of the sound at the receiver. As such, not only the identification of the dominant sound paths but also the direction of the sound at the receiver is identified so that the appropriate action may be taken for reduction in the sound transmission to the receiver as required.

It will also be understood that the sound transmission along any particular sound path may include multiple frequencies. As such, frequency analysis using mathematical techniques such as fast Fourier transforms may be required for a complete analysis of the sound system.

Having described our invention, many modifications thereto will become apparent to those skilled in the art to which it pertains without deviation from the spirit of the invention as defined by the scope of the appended claims.

**Claims**

1. A method for analyzing sound transmission in a system from a sound source (22), to a receiver (24) particle velocity sensor (50) comprising the steps of:

   identifying each sound path from the sound source (22) to the receiver (24),
   measuring transfer functions from each path (Path 1, Path 2, ...) to the receiver in terms of particle velocity,
   measuring an operating load (106) for each sound path (Path 1, Path 2, ...),
   multiplying the operating load of a path by the transfer function from the path to the receiver (24), which represents the contribution of the path to the particle velocity vector at the receiver (24),
   determining dominant sound paths in terms of the particle velocity and/or particle velocity vector from the calculated (106) each path contribution, or
   to a receiver microphone array comprising the steps of:

      identifying each sound path from the sound source to the receiver,
      measuring transfer function from each path to the receiver in terms of sound pressure at each microphone of the microphone array,
      measuring an operating load for each sound path,
      multiplying the operating load of a path by the transfer function from the path to the receiver, which represents the contribution of the path to the sound pressure distribution at the receiver,
      determining dominant sound paths in terms of the sound pressure distribution or a set of sound pressures from the calculated each path contribution.

2. The method as defined in claim 1 wherein said sound paths include air-borne paths and/or structure-borne paths (200, 202).

3. The method as defined in at least one of claims 1 to 2 wherein said particle velocity measuring step comprises the step of placing a particle velocity sensor at the receiver.

4. The method as defined in claim 1 wherein said sound paths include air paths and/or structural paths.

5. The method as defined in at least one of claims 1 to 4 wherein said transfer function calculating step for said structural path further comprises the steps of installing a force sensor in said structural sound path and reading the output from the force sensor.

6. The method as defined in at least one of claims 1 to 5 wherein said calculating step for said structural sound path further comprises the steps of installing an accelerometer in said structural sound path, reading the output from said accelerometer and estimating force from said accelerometer output for each said sound path.

7. The method as defined in at least one of claims 1 to 6 wherein said particle velocity measuring step comprises the step of placing a microphone array at the receiver.

8. The method as defined in at least one of claims 1 to 7 wherein said system comprises an automotive vehicle.

9. The method as defined in claim 8 wherein said vehicle includes a passenger compartment and wherein said receiver is positioned in said passenger compartment.

10. The method as defined in at least one of claims 1 to 9 wherein said step of measuring the load for said air sound path comprises the step of measuring air volume acceleration at the receiver.

11. The method as defined in at least one of claims 1 to 10 wherein said step of measuring the load for said structural sound path comprises the step of measuring force along said structural sound path.

# FIG. 1

Result of STPA Using 3D Intensity Transfer Function

3D Intensity Vector at Receiver from Path i

# FIG. 2

Result of STPA Using Spatial Transfer Function

Spatial Pressure Distribution of Path i

EP 2 574 951 A2

## FIG. 4

200: Identify Sound Source, Paths, Receiver and Sound Radiation Surface to Receiver

202: Measure Transfer Functions in terms of Sound Pressure, using Microphone Array

204: Operate Source, and Measure Responses at Paths and Receiver

206: Calculate 3D Spatial Contribution of Each Path in terms of Sound Pressure Distribution

## FIG. 3

100: Identify Sound Source, Paths and Receiver

102: Measure Transfer Functions in terms of Particle Velocity Vector

104: Operate Source, and Measure Responses at Paths and Receiver

106: Calculate 3D Spatial Contribution of Each Path in terms of Particle Velocity

10